(19) [European Patent Office logo] Europäisches Patentamt / European Patent Office / Office européen des brevets

(11) **EP 1 878 270 B1**

(12) **EUROPEAN PATENT SPECIFICATION**

(45) Date of publication and mention
of the grant of the patent:
**10.04.2013 Bulletin 2013/15**

(51) Int Cl.:
***H04Q 3/00*** *(2006.01)*  ***H04L 12/24*** *(2006.01)*

(21) Application number: **05756129.2**

(22) Date of filing: **01.07.2005**

(86) International application number:
**PCT/SE2005/001061**

(87) International publication number:
**WO 2006/118502 (09.11.2006 Gazette 2006/45)**

(54) **METHOD AND ARRANGEMENTS FOR RESERVATION OF RESOURCES IN A DATA NETWORK**

VERFAHREN UND ANORDNUNGEN ZUM RESERVIEREN VON BETRIEBSMITTELN IN EINEM DATENNETZWERK

PROCEDE ET SYSTEMES POUR LA RESERVATION DE RESSOURCES DANS UN RESEAU DE DONNEES

(84) Designated Contracting States:
**AT BE BG CH CY CZ DE DK EE ES FI FR GB GR HU IE IS IT LI LT LU MC NL PL PT RO SE SI SK TR**

(30) Priority: **03.05.2005 US 676944 P**

(43) Date of publication of application:
**16.01.2008 Bulletin 2008/03**

(73) Proprietor: **NetSocket, Inc.**
**Plano, TX 75025 (US)**

(72) Inventors:
• **BODIN, Ulf**
**S-973 32 Luleå (SE)**
• **KARLSSON, Johan**
**S-977 52 Luleå (SE)**

(74) Representative: **Epping - Hermann - Fischer Patentanwaltsgesellschaft mbH**
**Postfach 20 07 34**
**80007 München (DE)**

(56) References cited:
**WO-A-2004/040848**      **WO-A1-01/31605**
**US-A1- 2002 039 349**   **US-A1- 2003 084 182**
**US-A1- 2005 083 842**

**Description**

**Field of the invention**

The present invention relates to arrangements and a method for improving reservation of bulk resources in a data network. In particular, the present invention relates to arrangements and a method for determining the amount of bulk resources to be allocated.

**Background**

A current networking trend is to provide "Internet Protocol (IP) all the way" to wired and wireless units in an IP based data network. Objectives include simplifying the infrastructure, supporting a wide range of applications, and meeting diverse user demands on the communication service. Satisfying these objectives requires scalable and reliable solutions are needed providing service differentiation and dynamic bandwidth management within IP networks.

IP was from the beginning designed to be a general communication solution. IP technology is now recognised to be cheap and appropriate for supporting both traditional data applications and delay-sensitive real-time data applications. To provide expected service for real-time applications, logically (and physically) separate IP networks are used.

Each IP network serves only a subset of sensitive applications (e.g. IP telephony) with quite predictable bandwidth requirements. By limiting the range of applications, the total bandwidth demand can be predicted. This allows for the network to be dimensioned using the same traffic models as are used for vertically optimised networks. The benefit of cheap IP equipment is obtained without requiring support for dynamic service provisioning in the IP technology.

Network operators now aim at cutting the overhead cost of maintaining several parallel networks. One current trend is to simplify the infrastructure by running all kinds of applications, with various network service demands, in the same logical IP network (i.e. next generation multi-service networks). This means that the application heterogeneity in IP networks is increasing. In the research and standardisation bodies the development of Quality of Service (QoS) support has progressed from providing signalled solutions for the Internet (somewhat resembling the solutions used in vertical networks) to now recognising that more stateless solutions are favourable.

The scalability problems of solutions using per-flow QoS management in routers have resulted in the differentiated services architecture defined by the IETF. The objective with this architecture is to provide scalable QoS support without requiring per-flow state in routers. The basic idea is that IP packet headers include a small label (known as the DiffServ field) that identifies the treatment (per-hop behaviour) that packets should be given by the routers. Consequently, core routers are configured with a few forwarding classes and the labels are used to map packets into these classes. The architecture relies on packet markers and policing functions at the boundaries of the network to ensure that the intended services are provided.

One advantage of differentiated services is that the model preserves the favourable properties that made the Internet successful; it supports scalable and stateless forwarding over interconnected physical networks of various kinds. The standard model is, however, limited to differentiated forwarding in routers and therefore the challenge lies in providing predictable services to end users.

Qualitative services (relatively better than best-effort services, but depending on where the traffic is sent and on the load incurred by others at the time) can be provided by relying only on DiffServ support in routers and bandwidth management mechanisms for semi-static admission control and service provisioning.

To provide quantitative (minimum expectation) service, resources must be dynamically administrated by bandwidth management mechanisms and involve dynamic admission control to make sure that there are sufficient resources in the network to provide the services committed.

The entity performing dynamic admission control is in this specification called a bandwidth manager (BM). A similar arrangement is disclosed in document US 2005/083842 A1, A BM entity is adapted to keep track of the available network resources and performs admission control on incoming resource reservation requests from clients. Clients to a bandwidth manager entity are typically call servers emulating the traditional telephony service and various broadband application frameworks providing services such as video on demand, video telephony, and gaming. These clients are commonly referred to as application frameworks (AFs) and the term AF is also used in this specification to denote the clients to the BM.

A reservation request from an application framework to a BM typically include the amount of bandwidth needed, a description of the forwarding quality expected, and endpoint identifiers for the target data stream in the form of IP addresses. Such request may also include additional arguments such as start and stop times for the reservation.

To perform admission control the BM entity stores a history of previously admitted resource reservations. The BM entity takes decisions to admit new resource requests based on the total amount of available resources, the amount currently reserved by previously reservations and the amount of resources requested in the new resource request.

The BM entity should provide accurate resource control both in access domains and in core domains. Accurate resource control requires the BM entity to control resources at individual contention points in the network. Contention points in a network are those points at which multiple data streams share forwarding capacity. Examples include outgoing network interfaces, tunnel heads in MPLS networks, and VC/CP entrances in ATM networks.

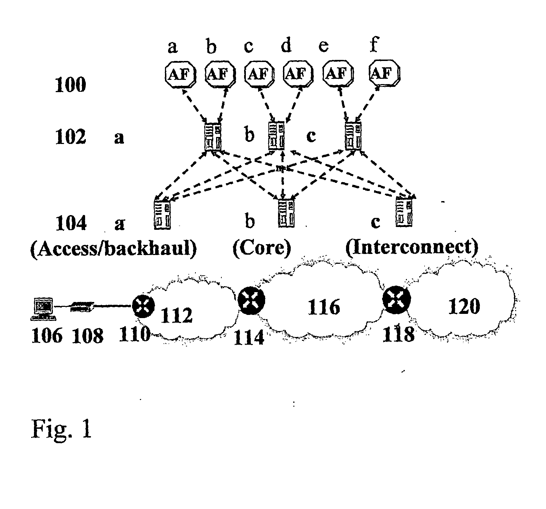

When deployed in large data networks that may include multiple network domains the BM system needs to be distributed for performance, scalability and reliability reasons. This means that BM instances may be distributed on a set of hardware platforms. These instances must communicate to serve AFs with resource reservation services in the different network domains covered by the BM system. Examples are described on how a set of BM instances can be arranged in distributed BM systems. **Figure 1** shows a BM deployment comprising a plurality of AFs 100a-f. The AF 100 a,b are connected to the top level BM entity 102 a, the AFs 100 c,d are connected to the top level 102b and the AFs 100 e,f are connected to the top level 102c. The top-level BM entities are further connected to the sub-network BM entities 104a-c. The example shown in **figure 1** cover bandwidth management in access 106,108,110, backhaul 112, core 116 and interconnect 120 domains. The access network comprises a Customer Premises Equipment (CPE) and an end-terminal. The backhaul network 112 and the core network 116 are connected via an IP edge 114 in the same way as the core network 116 and the interconnect network 120 that are connected via the IP edge denoted 118.

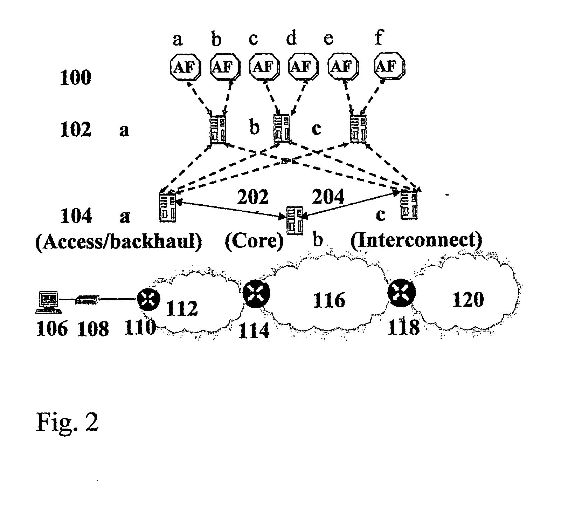

BM (instances) can be scaled in a hierarchical manner as shown in **Figure 1,** whereby BM entities at each level in the hierarchy reserve resources from lower level BM entities using interface IF-5. Lower level BM entities are responsible for different sub-domains of the network. Such BM entities are referred to as sub-network BM entities denoted S-BM entities. Top-level BM entities are responsible for identifying the sub-network that the session crosses and hence the sub-network BM entities that must be queried for resources. **Figure 2** illustrates a BM deployment as in **figure 1** with the difference that BM entities also may request resources from other BM entities in adjacent peer domains as indicated by the arrows 202 and 204.

In a distributed BM system mechanisms are provided for automatically finding the right BM entities across the layers in the hierarchy and between peers. Thereby an AF does not need to understand the underlying network topology. Finding the appropriate BM entity is achieved by using "source seeking" BM entities. Such BM entities take requests from initiating BM entities and forward them to the BM entity being responsible for performing the reservation.

For the hierarchical model multiple top-level BM entities interact with AFs. Each AF may have a designated top-level BM entity which provides a high level routing and distribution function, identifying the sub-network hops that the data stream must traverse. Top-level BM entities then pass requests to sub-network BM entities which are responsible for reserving resources in individual networks.

Because of the topology model and the routing function of the top-level BM, all hops of the reservation, originating access, core, terminating access can be derived from the top-level BM. In any architecture there can be multiple top-level BMs since no single top-level BM needs to understand the state of the reservations of the others.

Below the top-level BM multiple sub-network bandwidth managers are provided which map the reservation requests to the underlying network resources. These BMs take reservation requests from multiple top-level BMs and perform Call Admission Control (CAC) based on the occupancy of the network resources.

The hierarchically distributed BM architecture scales in two dimensions:

Scaling of reservation request load is obtained by deploying multiple top-level BMs. Bandwidth for individual sessions/calls are requested from the top-level BMs, which share aggregate resources in their domain by interacting with lower level BMs for requesting (pre-allocating) bandwidth aggregates.
Scaling to arbitrary large topologies is obtained by deploying several BM entities at the bottom layer responsible for different topological sub-domains inside the domain.
BM entities may be configured to allocate (aggregate) resources with BM entities in adjacent (peering) sub-domains an additional dimension of scale is achieved. By combining the hierarchical model with peering as shown in **Figure 2,** each top-level BM does not have to interact with each BM of the sub-domains. This effectively results in adding more levels to the hierarchy.

In the peering model the correct "source" BM for a session must be identified as it is responsible for initiating any requests to peer BM. In order to hide the network topology of the bandwidth management layer to the AF layer, the AF does not need to know where the source BM for each reservation is specifically located. The AF only needs to initiate a request to any BM and the request will be transferred to the source BM via a source seeking BM process, so that a normal process of the request for resources can be started.

Reserving resources in bulk

A reservation for bulk resources made by a given BM entity is an amount of resource allocated for an aggregate of reservations maintained by the BM entity. Such a bulk reservation can be made by a BM entity in advance to prepare for future reservation request arriving, or immediately as reservations are requested in the BM entity. E.g. say that 10 units of bandwidth is reserved for a given network resource and that a request for one additional unit arrives to a BM entity for this resource. The BM entity may then attempt to update its current bulk reservation of 10 units of bandwidth with the needed additional one unit, or attempt to update the bulk reservation with more then one additional unit to prepare for future requests that may arrive.

Hence, a bulk reservation is a reservation that supports one or more reservations or application data flows (aggregates) and may be done in advance but does not need to.

To allocate resources in bulk is further explained by the following. A single reservation request issued by an AF may result in that multiple resources need to be evaluated in the admission control process. For example, say that the path of such request span two access domains and one core domain. The sub-paths through an access domain involve two independent network interfaces at which traffic is contended. The path through the core network involves three such contention points.

Seven resources need to be evaluated for the path described in the previous paragraph. Without bulk allocation, the request for resources at this path will result in seven requests to lower-level BMs. This happens for every such request when all contention points are represented in the top-level BM.

With bulk allocation of resources the top-level BM can allocate more resources in each request from lower-level BMs than needed to grant the original reservation request from the AF. Thereby, an AF request will result in fewer requests between bandwidth BMs. For example, on average, 1000 AF requests could with bulk allocation result in 100 requests between BMs although each AF request may involve multiple independent resources.

In the example described in the previous section, top-level BMs need to communicate directly or indirectly with other BM entities to allocate aggregate bulk resources that can be offered to AFs. Bulk resources may also need to be allocated between the BM entities arranged in a hierarchy as shown in **Figure 1** or between peering BM entities as shown in **Figure 2** Naturally, the BMs need also to return bulk resources that are not needed in the near future. Note that the chain of BM entities involved in allocating bulk resources can include two or more BM entities arranged in hierarchy or as peers.

Bulk resources can be allocated between BM entities for individual contention points, for individual paths through a network domain, or for network domains. Contentions points, paths, and networks can all be represented as objects for which resources can be allocated. Such objects are referred to as <u>resource objects</u> in this specification.

The concept of allocating aggregate resources in bulk includes (a) storing knowledge of individual contention points, individual paths through a network domain, or network domains in top-level BMs, intermediate BMs, and bottom-level BMs. The knowledge of each such network resource can be represented in resource objects or equivalently in any other container for storing knowledge of network resources.

The knowledge of network resources can be maintained by a top-level BM for potentially all network domains at the path of AF reservation requests while intermediate BMs may maintain knowledge of network domains for parts of AF reservation requests. Bottom-level BMs typically maintain knowledge only of the network domain for which they are directly responsible.

Using the knowledge of individual contention points, paths, or networks the bulk concept further includes allocating and returning aggregate resources in bulk from other BMs in a BM system.

The problem of allocating bulk resources between BMs can be defined through a set of requirements. The two main requirements for such resource allocation are that such allocation must allow for short response times for reservation requests issued by application frameworks or BMs and efficient resource utilisation.

A further requirement is that the allocation of resources must not oscillate severely. Resource allocations can be said to oscillate when the amount of resources allocated in addition to the amount of resources used oscillate. E.g. say that 10 units of bandwidth are reserved in a BM, which in turn allocates 12 units from another BM. Assume further that the first BM alternates between allocating 14 units and 10 units (i.e. four units are repeatedly allocated and returned). Then, the alloction of resources by this BM is said to oscillate. Oscillation would lead to low resource utilisation and is thus implicitly covered by the second requirement.

### Summary of the invention

The bulk concept provides shorter response times for reservation requests issued by application frameworks and a more efficient resource utilisation. The object of the present invention is to improve the bulk concept by obtaining arrangements for determining the amount of resources to be allocated.

A further object is to prevent oscillation of allocation of resources.

The present invention relates to the information used to determine the amount of resources that should be allocated between bandwidth managers. The invention improves scalable resource control in a distributed bandwidth manager system.

The object of the present invention is achieved by the arrangements according to claim 1, 13 and 14 and by the method according to claim 7.

Preferred embodiments according to the present invention is defined by the dependent claims.

The method for reserving network resources requested from clients for resource objects in a data network comprising the step of determining a second amount of resources to be allocated in addition to the required first amount defined by the resource requests from the clients, wherein the second amount of resources to be determined is dependent on the rate at which the first and second amounts of allocated resources can be increased through admitted requests for more resources, improves the bulk concept by determining the amount of resources to be allocated.

The arrangement according to the present invention is associated with a Bandwidth Manager, BM, adapted to reserve network resources requested from clients for resource objects in a data network. The arrangement comprising means for determining a second amount of resources to be allocated in addition to the required first amount defined by the resource requests from the clients, wherein the second amount of resources to be determined is dependent on the rate at which the first and second amounts of allocated resources can be increased through admitted requests for more resources, improves the bulk concept by determining the amount of resources to be allocated.

In the arrangement according to a preferred embodiment, the second amount of resources to be determined is further dependent on the average amount of resources requested for each individual resource object.

In the arrangement according to a preferred embodiment, the second amount of resources to be determined is further dependent on the average rate of reservation requests issued by the BM for each individual resource object.

In the arrangement according to a preferred embodiment, the second amount of resources to be determined is further dependent on the current signalling delay imposed by the queuing of reservation request messages.

The arrangement according to a preferred embodiment, comprises means for determining a total amount of requested resources wherein the *requested amount of resources* $= \sigma + \theta * (1 + \rho) - \beta$, where $\sigma =$ the first amount of resources, i.e. the currently used resources, $\theta =$ the second amount of resources, i.e. the allocation span, $\rho =$ a parameter to be set to maintain the allocation span, and $\beta =$ is the amount of resources reserved form another BM.

In the arrangement according to a preferred embodiment, $\rho$ is set to be larger than zero.

The arrangement according to a preferred embodiment, comprises means for maintaining an amount of resources to be allocated as a base-level independent on the required amount defined by the resource requests. According to a further aspect, the present invention relates to a computer program product directly loadable into the internal memory of a computer within a router or server in a data network, comprising the software code portions for performing the steps of the method.

According to a yet further aspect, the present invention relates to a computer program product stored on a computer usable medium, comprising readable program for causing a computer, within a router or server in a data network, to control an execution of the steps of the method.

An advantage with the present invention is that the invention enables scalable resource control in a distributed bandwidth manager system within which resources are allocated in bulk. Through the invention target response times can be kept short while minimizing the amount of resources being pre-allocated to reduce those response times. This allows for efficient resource utilization by that resource requests to a distributed bandwidth manager system can be answered quickly without pre-allocating large amounts of resources. Rapid replies to such requests are important since clients may have to interpret delayed answers as if the requests were denied. This is because of the need for limiting post session initiation (dial) delays in application session (call) processing and since the amount of pending session (call) attempts often must be limited for capacity reasons of high-volume application session (call) processing platforms.

## Drawings

**Figure 1** shows a hierarchic bandwidth manager deployment.

**Figure 2** shows a hierarchic bandwidth manager deployment with peering.

**Figure 3** shows the arrangement according to the present invention.

**Figure 4** is a flowchart showing the method according to the present invention.

## Detailed description

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

The object of the present invention is achieved by arrangements and a method for determining a resource allocation span, i.e. an amount of resources to be allocated in addition to the required amount defined by the resource requests.

The total amount of resources that should be allocated between a given pair of entities capable of managing resources such as BMs is determined from an aggregate bulk resource allocation algorithm in order to maintain the allocation span according to one embodiment of the present invention.

At the minimum, the amount of resources that should be allocated by a BM is the amount of resources currently reserved by clients to the BM. Such clients may be either other BMs or AFs. A desirable property of a BM is the capability of answering to reservation requests from its clients without waiting for one or more bulk allocating reservation requests being granted. In addition to the minimum amount of resources that should be allocated, more resources need be allocated to achieve this property. Thereby the BM can prepare for new reservation requests that must be replied to immediately by allocating more resources in addition to the minimum amount of resources that should be allocated. The amount of additional resources that need to be allocated is here in this specification referred to as the resource allocation span. The present invention relates hence to the determination of a resource allocation span for each resource object which results in reduced response times for reservation requests.

According to the present invention, the resource allocation span is dependent on (a) the rate at which the first and second amounts of allocated resources can be increased through admitted requests for more resources, such as the current request signalling rate maintained by the signalling mechanism. Thus, a lower rate requires a larger span and a higher rate requires a smaller span.

According to embodiments of the present invention, the allocation span is further dependent on (b) the average amount of resources requested for each individual resource object, (c) the average rate of reservation requests issued by the BM for each individual resource object and/or on (d) the current signalling delay imposed by the queuing of reservation request messages.

It should be noted that (a) and (d) are the same for all resource objects while (b) and (c) are individual for all resource objects.

The propagation and queuing delay imposed by the network connecting communicating BMs can be ignored given that it is small compared to the internal delay imposed the queuing of request messages made in BMs. If the network delay be close to the internal delay the network delay needs to be included in the signalling delay defined in (d).

A further embodiment of the present invention relates to maintain the resource allocation span for each resource object. The amount of resources that should be maintained for a particular resource object is a first amount of resources, i.e. the currently used resources, $\sigma$, plus a second amount of resources, i.e. the resource allocation span, $\theta$. When resources need to be requested, the amount of resources defined in **Equation 1** shown below should be requested in order to maintain the allocation span according to an embodiment of the present invention. In **equation 1,** $\sigma$ is the currently used resources, $\theta$ is the allocation span, $\beta$ is the amount of resources currently reserved from another BM and $\rho$ is a parameter to be set to maintain the allocation span and to prevent oscillation. Resources are requested when equation 1 becomes larger than zero due to resource request being granted by the BM maintaining resources for the resource object.

$$\text{The amount of resources to be requested} = \sigma + \theta * (1 + \rho) - \beta$$

**Equation 1**

In the **equation 1,** results a $\rho$ larger than zero in that a further additional amount of resources than needed are requested in order to maintain the resource allocation span $\theta$. E.g., $\rho = 1$ means that twice this amount is requested. Allocating this additional amount of resources reduces the rate of reservation requests issued for the resource object. Setting $\rho$ to zero can cause the allocation span $\theta$ to oscillate, since the rate of reservation requests is used to calculate the resource allocation span. Resource allocations can be said to oscillate when the amount of resources allocated in addition to the amount of resources used oscillate. E.g. say that 10 units of bandwidth are reserved in a BM, which in turn allocates 12 units from another BM. Assume further that the first BM alternates between allocating 14 units and 10 units (i.e. four units are repeatedly allocated and returned). Then, the allocation of resources by this BM is said to oscillate. Resource requests increase the allocation span $\theta$ which triggers new resource requests causing the allocation span $\theta$ to be further increased. Thereby $\theta$ will be increased until the demand of clients for these resources decreases. Setting $\rho$ larger than zero hence prevents oscillation.

According to a further embodiment, the arrangement comprises means for optionally maintaining a resource allocation base-level, i.e. an amount of resources to be allocated as a base-level independent on the required amount defined by the resource requests. The optional resource allocation base-level can be maintained over a longer time-scale to reduce the need for adapting the amount of resources at a shorter time-scale using the aggregate bulk resource allocation algorithm.

The amount of resources allocated for resource allocation base-levels by a BM can for example be determined based on the average need for resources or any given percentile of the amount of resources used during the period of which the resource allocation base-levels are maintained. Such period should be considerably longer than periods of reservations made by AFs or other resource requesting entities.

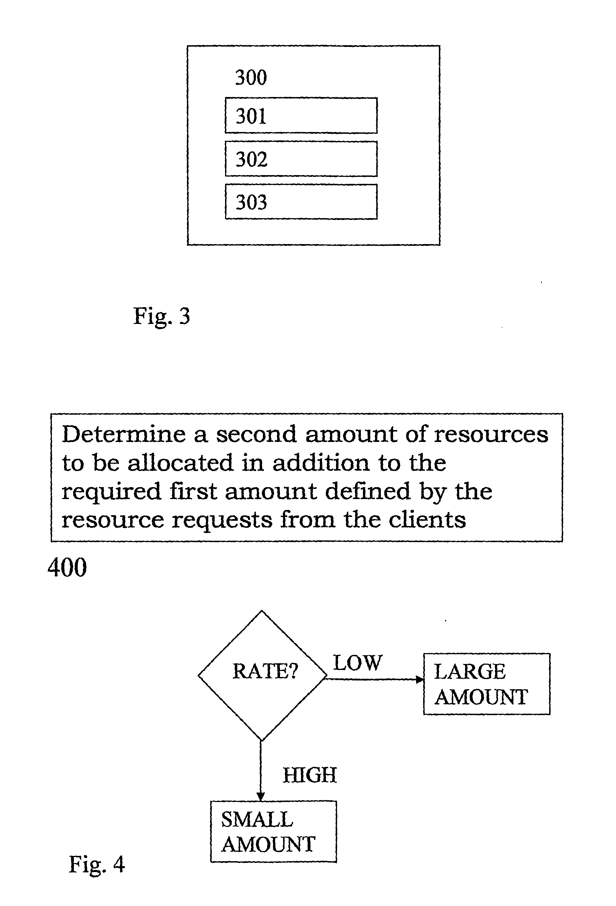

Turning now to figure 3 showing the arrangement according to embodiments of the present invention. The arrangement 300 being associated with a BM comprises means for determining 301 a second amount of resources to be allocated in addition to the required first amount defined by the resource requests from the clients, wherein the second amount of resources to be determined is dependent on the rate at which the first and second amounts of allocated resources can be increased through admitted requests for more resources. Further the arrangement according to the embodiments comprises means for determining a total amount of requested resources 302 wherein the *requested amount of resources* $= \sigma + \theta * (1 + \rho) - \beta$, where $\sigma =$ the first amount of resources, i.e. the currently used resources, $\theta=$the second amount of resources, i.e, the allocation span, $\rho =$ a parameter to be set to maintain the allocation span, and $\beta =$is the amount of resources reserved form another BM.

In addition the embodiments comprises means for maintaining 303 an amount of resources to be allocated as a base-level independent on the required amount defined by the resource requests.

Turning now to figures 4 showing a flowchart of the method according to the present invention.

The method comprises the step:

400. Determine a second amount of resources to be allocated in addition to the required first amount defined by the resource requests from the clients, wherein the second amount of resources to be determined is dependent on the rate at which the first and second amounts of allocated resources can be increased through admitted requests for more resources. A lower rate implies a larger second amount of resources and a higher rate implies a smaller second amount of resources which is illustrates by fig 4.

In the drawings and specification, there have been disclosed typical preferred embodiments of the invention and, although specific terms are employed, they are used in a generic and descriptive sense only and not for purposes of limitation, the scope of the invention being set forth in the following claims.

**Claims**

1. An arrangement comprising:

   - one or more top-level bandwidth managers (102; 102a, 102b, 102c) that receive resource requests for individual sessions and/or calls from one or more application frameworks (100; 100a - 100f); and
   - one or more sub-network bandwidth managers (104; 104a, 104b, 104c) communicatively coupled to one or more of the top-level bandwidth mangers (102);
   - the one or more sub-network bandwidth managers (104) receiving resource requests from one or more of the top-level bandwidth managers (102) to reserve network resource aggregates for links/resources in a sub-network;
   - wherein the top-level bandwidth managers (102) determine an amount of resources to be requested, the determined amount of resources to be requested being based on:

      - an amount of resources requested from the application frameworks (100),
      - an amount of a resource allocation span, and
      - an amount of resources reserved from other top-level bandwidth managers (102);

   - the resource allocation span being an amount of additional resources to be allocated in addition to the amount of resources requested from the application frameworks.

2. The arrangement according to claim 1, **characterised in that** the amount of the resource allocation span is dependent on the average amount of resources requested for each individual resource object.

3. The arrangement according to any of claims 1-2, **characterised in that** the amount of the resource allocation span is dependent on the average rate of reservation requests issued by the the top-level bandwidth managers (102) for each individual resource object.

4. The arrangement according to any of claims 1-3, **characterised in that** the amount of the resource allocation span is dependent on a current signalling delay imposed by the queuing of reservation request messages.

5. The arrangement according to any of claims 1-4, **characterised in that** the amount of resources to be requested is = σ + θ * (1 + ρ) - (β, where
σ = the amount of resources requested from the application frameworks (100),
θ = the amount of the resource allocation span,
ρ = a parameter to be set to maintain the amount of the resource allocation span, and
β = the amount of resources reserved form other top-level bandwidth managers (102).

6. The arrangement according to any of claims 1-5, **characterised in that** ρ is set to be larger than zero.

7. The arrangement according to any of claims 1-6, **characterised in that** it comprises means for maintaining an amount of resources to be allocated as a base-level independent of resources requested from the application frameworks (100).

8. A method for reserving network resources requested, from one or more application frameworks (100; 100a - 100f) for resource objects in a data network, by aggregate resource requests received by one or more of top-level bandwidth managers (102; 102a, 102b, 102c), the method comprising:

   - determining an amount of resources to be allocated, the amount of resources to be allocated being based on

      - a first amount of resources,
      - a second amount of resources, and
      - an amount of resources reserved from other top-level bandwidth managers (102);

   - the first amount of resources being an amount of resources defined by resource requests from one or more application frameworks (100; 100a - 100f) and
   - the second amount of resources being an amount of additional resources to be allocated in addition to the first amount.

9. The method according to claim 8, **characterised in that** the second amount of resources to be allocated is dependent on an average amount of resources requested for each resource object.

10. The method according to any of claims 8-9, **characterised in that** the second amount of resources to be allocated is dependent on an average rate of reservation requests issued by the top-level bandwidth managers (102) for each resource object.

11. The method according to any of claims 8-10, **characterised in that** the second amount of resources to be allocated is dependent on a current signalling delay imposed by queuing of reservation request messages.

12. The method according to any of claims 8-11, **characterised in that** the amount of resources to be allocated is = σ + θ * (1 + ρ) - β, where
σ = the first amount of resources,
θ = the second amount of resources,
ρ = a parameter to be set to maintain the second amount of resources, and
β = the amount of resources reserved form other top-level bandwidth managers (102).

13. The method according to any of claims 8-12, **characterised in that** it further comprises setting ρ larger than zero.

14. The method according to any of claims 8-13, **characterised in that** it further comprises maintaining an amount of resources to be allocated as a base-level independent of the resource requests from the one or more application frameworks (100).

15. A computer program product stored on a computer usable medium, comprising readable program for causing a computer, within a router or server in a data network, to control an execution of the steps of any of the claims 8 - 14.

**Patentansprüche**

1. Anordnung, die umfasst:

   - einen oder mehrere auf oberer Ebene arbeitende/n Bandbreiten-Manager (102; 102a; 102b; 102c), die Betriebsmittelanforderungen für einzelne Sitzungen und/oder Aufrufe von einem oder mehreren Applikationsrahmen (100; 100a - 100f) empfangen; und
   - einen oder mehrere Teilnetzwerk-Bandbreiten-Manager (104; 104a, 104, 104c), der/die in Kommunikationsverbindung an einen oder mehrere der auf oberer Ebene arbeitenden Bandbreiten-Manager (102) aufgeschaltet ist/sind;
   - wobei der eine oder die mehreren Teilnetzwerk-Bandbreiten-Manager (104) Betriebsmittelanforderungen von einem oder mehreren der auf oberer Ebene arbeitenden Bandbreiten-Manager (102) zum Reservieren von Netzwerkbetriebsmittelansammlungen für Verbindungen/Betriebsmittel in einem Teilnetzwerk empfängt/empfangen;
   - wobei die auf oberer Ebene arbeitenden Bandbreiten-Manager (102) eine Menge an anzufordernden Betriebsmitteln bestimmen, wobei die bestimmte Menge an anzufordernden Betriebsmitteln basiert auf:

     - einer Menge an Betriebsmitteln, die von den Applikationsrahmen (100) angefordert werden,
     - einer Menge einer Betriebsmittelzuteilungsspanne, und
     - einer Menge an Betriebsmitteln, die von anderen auf oberer Ebene arbeitenden Bandbreiten-Managern (102) reserviert werden;

     - wobei es sich bei der Betriebsmittelzuteilungsspanne um eine Menge an zusätzlichen Betriebsmitteln handelt, die zusätzlich zu der von den Applikationsrahmen angeforderten Menge an Betriebsmitteln zugeteilt werden soll.

2. Anordnung nach Anspruch 1, **dadurch gekennzeichnet, dass** die Menge der Betriebsmittelzuteilungsspanne von der durchschnittlichen Menge an Betriebsmitteln abhängt, die für jeden einzelnen Betriebsmittelgegenstand angefordert werden.

3. Anordnung nach einem der Ansprüche 1-2, **dadurch gekennzeichnet, dass** die Menge der Betriebsmittelzuteilungsspanne von der durchschnittlichen Rate an Reservierungsanforderungen abhängt, die durch die auf oberer Ebene arbeitenden Bandbreiten-Manager (102) für jeden einzelnen Betriebsmittelgegenstand erteilt werden.

4. Anordnung nach einem der Ansprüche 1-3, **dadurch gekennzeichnet, dass** die Menge der Betriebsmittelzuteilungsspanne von einer aktuellen Signalübertragungsverzögerung abhängt, die durch eine Warteschlangenbildung von Reservierungsanforderungsnachrichten bedingt ist.

5. Anordnung nach einem der Ansprüche 1-4, **dadurch gekennzeichnet, dass** es sich bei der Menge an anzufordernden Betriebsmitteln um $\sigma + \theta * (1 + \rho) - \beta$ handelt, worin

   o die Menge an Betriebsmitteln ist, die von den Applikationsrahmen (100) angefordert werden,

   $\theta$ die Menge der Betriebsmittelzuteilungsspanne ist,

   $\rho$ ein Parameter ist, der angesetzt werden soll, um die Menge der Betriebsmittelzuteilungsspanne beizubehalten, und

   $\beta$ die Menge an Betriebsmitteln ist, die von anderen auf oberer Ebene arbeitenden Bandbreiten-Managern (102) reserviert sind.

6. Anordnung nach einem der Ansprüche 1-5, **dadurch gekennzeichnet, dass** $\rho$ größer als Null angesetzt wird.

7. Anordnung nach einem der Ansprüche 1-6, **dadurch gekennzeichnet, dass** sie Einrichtungen umfasst, um eine Menge an zuzuteilenden Betriebsmitteln als Basispegel unabhängig von Betriebsmitteln beizubehalten, die von den Applikationsrahmen (100) angefordert werden.

8. Verfahren zum Reservieren von Netzwerkbetriebsmitteln, die von einem oder mehreren Applikationsrahmen (100; 100a-100f) für Betriebsmittelobjekte in einem Datennetz durch angesammelte Betriebsmittelanforderungen angefordert werden, die durch einen oder mehrere auf oberer Ebene arbeitenden Bandbreiten-Manager (102; 102a, 102b, 102b) empfangen werden, wobei das Verfahren umfasst:

   - Bestimmen einer Menge an zuzuteilenden Betriebsmitteln, wobei die Menge an zuzuteilenden Betriebsmitteln beruht auf

- einer ersten Menge an Betriebsmitteln,
- einer zweiten Menge an Betriebsmitteln, und
- einer Menge an Betriebsmitteln, die von anderen auf oberer Ebene arbeitenden Bandbreiten-Managern (102) reserviert sind;

- wobei es sich bei der ersten Menge an Betriebsmitteln um eine Menge an Betriebsmitteln handelt, die durch Betriebsmittelanforderungen von einem oder mehreren Applikationsrahmen (100; 100a-100f) definiert ist, und
- wobei es sich bei der zweiten Menge an Betriebsmitteln um eine Menge zusätzlicher Betriebsmittel handelt, die zusätzlich zur ersten Menge zugeteilt werden sollen.

9.  Verfahren nach Anspruch 8, **dadurch gekennzeichnet, dass** die zweite Menge an zuzuteilenden Betriebsmitteln von einer durchschnittlichen Menge an Betriebsmitteln abhängt, die für jeden Betriebsmittelgegenstand angefordert werden.

10. Verfahren nach einem der Ansprüche 8-9, **dadurch gekennzeichnet, dass** die zweite Menge an zuzuteilenden Betriebsmitteln von einer durchschnittlichen Rate an Reservierungsanforderungen abhängt, die durch die auf oberer Ebene arbeitenden Bandbreiten-Manager (102) für jeden Betriebsmittelgegenstand erteilt werden.

11. Verfahren nach einem der Ansprüche 8-10, **dadurch gekennzeichnet, dass** die zweite Menge an zuzuteilenden Betriebsmitteln von einer aktuellen Signalübertragungsverzögerung abhängt, die durch eine Warteschlangenbildung von Reservierungsanforderungsnachrichten bedingt ist.

12. Verfahren nach einem der Ansprüche 8-11, **dadurch gekennzeichnet, dass** es sich bei der Menge an anzufordernden Betriebsmitteln um $\sigma + \theta * (1 + \rho) - \beta$ handelt, worin

    $\sigma$ die erste Menge an Betriebsmitteln ist,
    $\theta$ die zweite Menge an Betriebsmitteln ist,
    $\rho$ ein Parameter ist, der angesetzt werden soll, um die zweite Menge an Betriebsmitteln beizubehalten, und
    $\beta$ die Menge an Betriebsmitteln ist, die von anderen auf oberer Ebene arbeitenden Bandbreiten-Managern (102) reserviert werden.

13. Verfahren nach einem der Ansprüche 8-12, **dadurch gekennzeichnet, dass** es darüber hinaus umfasst, p größer als Null anzusetzen.

14. Verfahren nach einem der Ansprüche 8-13, **dadurch gekennzeichnet, dass** es darüber hinaus umfasst, eine Menge an zuzuteilenden Betriebsmitteln als Basispegel unabhängig von den Betriebsmittelanforderungen von dem einen oder den mehreren Applikationsrahmen (100) beizubehalten.

15. Computerprogrammprodukt, das auf einem durch einen Computer verwendbaren Träger gespeichert ist, ein lesbares Programm umfassend, um einen Computer innerhalb eines Routers oder Servers in einem Datennetz eine Ausführung der Schritte nach einem der Ansprüche 8-14 steuern zu lassen.

**Revendications**

1.  Dispositif comprenant:

    - un ou plusieurs gestionnaires de largeur de bande de niveau supérieur (102 ; 102a, 102b, 102c) qui reçoivent des demandes de ressources pour des sessions et/ou appels individuels depuis un ou plusieurs cadres d'application (100; 100a-100f); et
    - un ou plusieurs gestionnaires de largeur de bande de sous-réseau (104; 104a, 104b, 104c) en liaison communicationnelle avec un ou plusieurs des gestionnaires de largeur de bande de niveau supérieur (102);
    - l'un ou les plusieurs gestionnaires de largeur de bande de sous-réseau (104) recevant des demandes de ressources depuis un ou plusieurs des gestionnaires de largeur de bande de niveau supérieur (102) pour réserver des groupes de ressources de réseau pour des liens/ressources dans un sous-réseau;
    - où les gestionnaires de largeur de bande de niveau supérieur (102) déterminent une quantité de ressources à demander, la quantité déterminée de ressources à demander étant basée sur:

        - une quantité de ressources demandées depuis les cadres d'application (100),

- une quantité d'une plage d'affectation de ressources, et
- une quantité de ressources réservées depuis d'autres gestionnaires de largeur de bande de niveau supérieur (102);

- la plage d'affectation de ressources étant une quantité de ressources additionnelles à affecter en plus de la quantité de ressources demandées depuis les cadres d'application.

**2.** Le dispositif selon la revendication 1, **caractérisé en ce que** la quantité de la plage d'affectation de ressources dépend de la quantité moyenne de ressources demandées pour chaque objet de ressources individuel.

**3.** Le dispositif selon l'une quelconque des revendications 1-2, **caractérisé en ce que** la quantité de la plage d'affectation de ressources dépend du taux moyen de demandes de réservation émises par les gestionnaires de largeur de bande de niveau supérieur (102) pour chaque objet de ressources individuel.

**4.** Le dispositif selon l'une quelconque des revendications 1-3, **caractérisé en ce que** la quantité de la plage d'affectation de ressources dépend d'un retard de signalisation actuel imposé par la mise en file d'attente de messages de demande de réservation.

**5.** Le dispositif selon l'une quelconque des revendications 1-4, **caractérisé en ce que** la quantité de ressources à demander est $= \sigma + \theta * (1 + p) - \beta$, où

$\sigma$ = la quantité de ressources demandées depuis les cadres d'application (100),

$\theta$ = la quantité de la plage d'affectation de ressources,

$\rho$ = un paramètre à régler pour maintenir la quantité de la plage d'affectation de ressources, et

$\beta$ = la quantité de ressources réservées depuis d'autres gestionnaires de largeur de bande de niveau supérieur (102).

**6.** Le dispositif selon l'une quelconque des revendications 1-5, **caractérisé en ce que** $\rho$ est réglé pour être supérieur à zéro.

**7.** Le dispositif selon l'une quelconque des revendications 1-6, **caractérisé en ce qu'**il comprend des moyens pour maintenir une quantité de ressources à affecter comme niveau de base indépendamment de ressources demandées depuis les cadres d'application (100).

**8.** Procédé pour réserver des ressources de réseau demandées, depuis un ou plusieurs cadres d'application (100; 100a-100f) pour des objets de ressources dans un réseau de données, par des demandes de ressources groupées reçues par un ou plusieurs des gestionnaires de largeur de bande de niveau supérieur (102; 102a, 102b, 102c), le procédé comprenant:

- la détermination d'une quantité de ressources à affecter, la quantité de ressources à affecter étant basée sur:

- une première quantité de ressources,
- une deuxième quantité de ressources, et
- une quantité de ressources réservées depuis d'autres gestionnaires de largeur de bande de niveau supérieur (102);

- la première quantité de ressources étant une quantité de ressources définie par des demandes de ressources depuis un ou plusieurs cadres d'application (100; 100a -100f); et
- la deuxième quantité de ressources étant une quantité de ressources additionnelles à affecter en plus de la première quantité.

**9.** Le procédé selon la revendication 8, **caractérisé en ce que** la deuxième quantité de ressources à affecter dépend d'une quantité moyenne de ressources demandées pour chaque objet de ressources.

**10.** Le procédé selon l'une quelconque des revendications 8-9, **caractérisé en ce que** la deuxième quantité de ressources à affecter dépend d'un taux moyen de demandes de réservation émises par les gestionnaires de largeur de bande de niveau supérieur (102) pour chaque objet de ressources.

**11.** Le procédé selon l'une quelconque des revendications 8-10, **caractérisé en ce que** la deuxième quantité de ressources à affecter dépend d'un retard de signalisation actuel imposé par la mise en file d'attente de messages de demande de réservation.

**12.** Le procédé selon l'une quelconque des revendications 8-11, **caractérisé en ce que** la quantité de ressources à affecter est = σ + e * (1 + ρ) - β, où

σ = la première quantité de ressources,

θ = la deuxième quantité de ressources,

ρ = un paramètre à régler pour maintenir la deuxième quantité de ressources, et

β = la quantité de ressources réservées depuis d'autres gestionnaires de largeur de bande de niveau supérieur (102).

**13.** Le procédé selon l'une quelconque des revendications 8-12, **caractérisé en ce qu'**il comprend en outre le fait de régler ρ pour qu'il soit supérieur à zéro.

**14.** Le procédé selon l'une quelconque des revendications 8-13, **caractérisé en ce qu'**il comprend en outre le fait de maintenir une quantité de ressources à affecter comme niveau de base indépendamment des demandes de ressources depuis l'un ou les plusieurs cadres d'application (100).

**15.** Produit de programme informatique enregistré sur un support utilisable par ordinateur, comprenant un programme lisible pour faire en sorte qu'un ordinateur, au sein d'un routeur ou d'un serveur dans un réseau de données, commande une exécution des étapes selon l'une quelconque des revendications 8-14.

Fig. 1

a    b    c    d    e    f

100

102    a        b    c

202    204

104    a                c
(Access/backhaul)   (Core)   b   (Interconnect)

112          116         120

106 108 110         114        118

Fig. 2

300

301

302

303

Fig. 3

Determine a second amount of resources to be allocated in addition to the required first amount defined by the resource requests from the clients

400

RATE? — LOW → LARGE AMOUNT

HIGH ↓ SMALL AMOUNT

Fig. 4

**EP 1 878 270 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005083842 A1